# EUROPEAN PATENT SPECIFICATION

(11) **EP 0 226 431 B1**
(45) Date of publication and mention of the grant of the patent: **05.04.1995**
(21) Application number: 86309566.7
(22) Date of filing: 09.12.1986
(51) Int. Cl.: B01D 63/02

(54) **Hollow fiber separatory module**
Hohlfasermodul für Trennungsverfahren
Module de séparation à fibres creuses

(30) Priority: 10.12.1985 US 807358; 19.02.1986 US 831158
(43) Date of publication of application: 24.06.1987
(73) Proprietor: ALBANY INTERNATIONAL CORP., Albany, New York 12204 (US)
(72) Inventor: Coplan, Myron J., Natick Massachusetts 01760 (US)
(74) Representative: Hill, Cecilia Ann (GB)

(56) References cited:
- FR-A- 2 267 138
- FR-A- 2 542 203
- GB-A- 2 059 290
- US-A- 4 378 981
- PATENT ABSTRACTS OF JAPAN, vol. 3, no. 133 (C-63), 7th November 1979; & JP-A-54110183 (TOYO BOSEKI K.K.) 29-08-79

## Description

This invention pertains to hollow fiber separatory module devices, and more particularly to a separatory module which comprises an annular fiber bundle and in which fluid flows parallel to the central axis of the fiber array.

The use of membranes to effect separation of gas/gas, liquid/liquid, and liquid/solid mixtures and solutions has achieved general industrial applicability by various methods, among them being ultrafiltration, hyperfiltration reverse osmosis, dialysis. In general, membrane elements associated with these processes are contained in vessels called modules, comprising a shell having various inlet and outlet ports and an assembly of membranes within said shell. The internal configurations are so arranged as to permit the introduction of a feed stream with or without pressure on the upstream face of the membranes, means for collecting permeate which passes through the membrane and emerges on their downstream faces, and means for keeping feed and permeate materials from commingling.

US-A-4,207,192 discloses one form of hollow filament separatory module and method for its fabrication.

When hollow fiber membranes are used to separate components of a gas mixture, or solutes dissolved in liquid solutions, there are a number of methods of flowing the mixture to be separated over the membranes. The flowing method employed determines the manner in which the individual hollow fiber membrane units are to be organized within the pressure shell. One very common method of fiber arrangement involves arranging large numbers of parallel and straight fibers into a generally cylindrical cross-section comprising thousands or perhaps millions of such fibers arranged around an axially parallel center core tube. The core tube may be perforated or slotted and act as an inlet conduit for pressurized feed fluid. The fluid is pumped outward among the fibers at right angles to their axes and as it reaches the outer regions of the fiber array the fluid is collected in an annular space adjacent to the pressure shell inner wall surface. The same general physical arrangement of fibers might be used for flowing in the opposite direction by introducing feed in the annular space adjacent to the inner wall surface of the pressure shell and traversing radially inward toward the perforated tube lying in the center of the fiber array. As another variant to this general approach, the fiber may be wound around the center core tube in reversing helical fashion and feed introduced either into the core tube or into the perimeter of the bundle as discussed above. All of these options correspond to different forms of cross-flow feeding. That is, the flow direction or permeate in the bores of the fibers is generally at right angles to the direction of flow of the feed over their external surfaces.

A preferable mode of feed direction flow is co-or counter-flow, parallel to the flow of permeate in the hollow fibers. In order to achieve either of these the feed must generally flow parallel to, rather than at a right angle to, the central axis of the fiber array. The fibers may be organized either in straight assemblies parallel to the central axis of the array or, alternatively, wound in helical fashion around said central axis, as in the cross-flow situations.

An example of a hollow fiber type membrane separation apparatus in which the feed direction is parallel to an annular bundle of straight fibres is disclosed in the Patent Abstracts of Japan, vol. 3, no. 133 (C-63), 7th November 1979 and JP-A-54 110 183. In that apparatus, which has a construction according to the preamble of claim 1, feed and raffinate fluid, respectively, enters and exits the fiber bundle through a plurality of columns that penetrate the otherwise continuous, impermeable layer and the mandrel.

French Patent Serial No. 2 542 203 describes a dialyser which comprises a bundle of fibers wrapped in a sheet and mounted within an outer shell. The sheet facilitates the insertion of the fiber bundle into the shell and abuts the inside wall of the shell for the majority of its length.

However, inducing parallel flow of feed among the fibers creates opportunity for the pressurized feed gas or liquid to find bypass flow paths outside of the bundle. Such bypass route may be, for example, between the inner surface of the shell wall and the outermost fibers of the bundle. It is also possible with relatively loosely packed parallel arrays of fibers that there may be bypass channels among the fibers. One possible means to overcome the latter bypass problem is to wind the fibers into relatively tight packages by helical winds of alternating S & Z directions around a central support member, thereby creating a generally annular bundle. Such a bundle arrangement may then be inserted into a pressure containment shell, but a means must be found to occlude any space between the outer regions of the bundle and inner surface of the pressure shell wall to avoid the first bypass route noted above. A number of schemes have been attempted for this including such devices as lip seals, tightly embracing braids, shrink sleeves, etc.. These have certain advantages but still, on frequent occasions, permit flow bypassing and have other inherent problems. FR-A-2 267 138 discloses the use of an impermeable casing arranged around hollow fibers in a separation apparatus, which casing is made at least partially of an elastic material or a material having an elastic memory, and may, for example, be a heat-shrunk casing. (See also US Patent No. 4,400,276).

An object of the present invention is to provide a hollow fiber separatory module utilising axial feed fluid flow, wherein the problem of bypass flow occurring along the fiber bundle-pressure shell interface or among relatively loosely packed fibers can be overcome.

The present invention provides a hollow fiber separatory module for separating fluids into permeate and raffinate components, comprising an annular hollow fiber bundle having first and second ends, potting material encapsulating said second bundle end, an impermeable barrier encasing the entirety of the longitudinal cylindrical surface of said bundle except for an opening located adjacent to said potting material, an end-cap sealed at the first end of the bundle to said barrier, a pressure resistant shell encasing said bundle and defining a channel between the inside surface of said shell and the external surface of said barrier, a port at said second bundle end in fluid communication with the bores of the hollow fibers for the removal of permeate component, a first port at said first bundle end in fluid communication with the external surfaces of the hollow fibers near said second bundle end via the channel, and a second port at said first bundle end in fluid communication with the external surfaces of the hollow fibers via a hollow mandrel which extends along the longitudinal axis of the bundle and passes through said end-cap, said bundle consisting of fibers helically wound upon said mandrel, characterized in that said impermeable barrier closely conforms to said longitudinal cylindrical surface of said bundle and said opening extends circumferentially around and exposes to said channel, at said second end of the bundle, said longitudinal cylindrical surface of said bundle such that feed flow into or raffinate flow out of the longitudinal cylindrical surface at said second end of the bundle is uniform around the bundle.

The impermeable barrier material may be a wrap of an impervious film, or it may be an impervious coating material applied from a solvent that is innocuous to the membrane. The impervious barrier may alternatively be in the form of a shrink sleeve installed over the bundle and shrunk onto the bundle.

In the module the annular hollow fiber bundle is wound upon the mandrel, which comprises a hollow tube having one end extending through the end-cap, said one end having an opening therein for communication with the exterior of the module, the hollow tube also having at least one opening in a wall thereof, said opening being located interiorly of the end-cap and providing fluid communication with the fiber bundle.

The inlet feed means may be in fluid communication with the channel, and the outlet means for the raffinate component may be in fluid communication with the fiber bundle. Alternatively, the inlet feed means may be in fluid communication with the fiber bundle and the outlet means for the raffinate component may be in fluid communication with the channel.

The term "feed fluid" as used herein refers to a feed liquid or a feed gas.

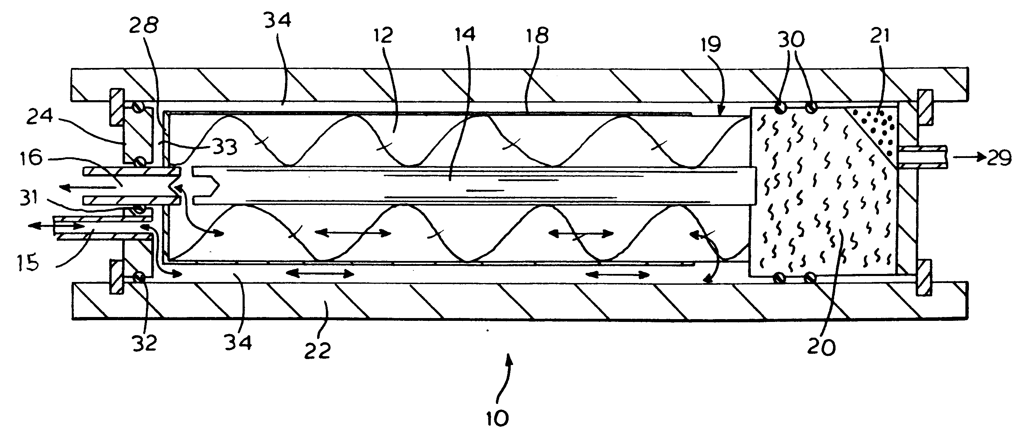

By way of example, a separatory module constructed in accordance with the invention will be described with reference to the accompanying drawing which shows a longitudinal section of the module.

The figure illustrates a hollow fiber separatory module 10 for separating feed fluid. An annular shaped hollow fiber bundle 12 is formed by winding individual fibers in helical winds about a mandrel in the form of a hollow support mandrel 14 which is preferably a hollow support rod defining an exit passage, and which has a bundle access port 16. Said access port may serve as the connection to the pressurized feed source, or as an exit for raffinate fluid which does not permeate the walls of the hollow filament.

Fiber bundle 12 is encased by an impermeable barrier 18 which may be a wrap of an impervious film (for example polyvinylidene or the like) or it may be an impervious coating material applied from an innocuous solvent (for example, polysiloxane). Alternately, the impervious barrier 18 may be a shrink sleeve installed over the bundle and shrunk onto it. In any event barrier material 18 closely adheres to the external cylindrical surface of the bundle and to end-cap 28. Barrier material 18 along with end-cap 28 encapsulates the entirety of the surface of fiber bundle 12 except for an unencapsulated circumferential surface region 19.

After impervious barrier 18 and end-cap 28 are applied to the bundle, potting material 20 is applied to the opposite end of fiber bundle 12 as shown. Potting material is a resinous sealant for terminating the fiber ends and for keeping feed and permeate materials from commingling. Fiber bore openings are created in an oblique plane of the potting material indicated at 21. Permeates exit from the system at 29.

The encased and potted fiber bundle is then encapsulated by a pressure resistant cylindrical shell 22. Shell 22 is designed to withstand internal fluid pressures generated by inlet of pressurized fluid feed into the separatory module. At one end shell 22 has two ports, 15 and 16.

The double headed arrows signify alternative possible flow directions such that if port 16 is the inlet for pressurized feed, 15 is the outlet for raffinate, and vice versa. In the former situation the feed gas on the upstream side of the fiber surface flows generally parallel to and in the same direction as the flow permeate gas in the fiber bores, normally in a co-flow mode. In the latter alternative, namely, where feed is admitted at 15, the flow path through the bundle is generally parallel but in the direction opposite to flow permeate in the fiber bores.

"O" rings 30 provide an impermeable seal between potting material 20 and the inside surface of the pressure resistant shell. Other "O" rings 31, 32 seal between end-plate 24 and tube 14 and between end-plate 24 and the inside surface of pressure shell 22.

When pressurized fluid feed is fed into access port 15 it enters plenum area 33 and then passes into channel 34 between the inside surface of the pressure resistant shell and impermeable barrier 18. This use of sealed channel 34 as a necessary portion of the fluid feed path overcomes the problem of prior art separator devices of fiber bypass flow occurring between the pressure resistant shell and the fiber bundle. The fluid passes from channel 34 through the circumferentially unencased region 19 into fiber bundle 12. At this point the pressurized feed travels through the fiber bundle in a direction generally parallel to the axis of annular bundle 12. Permeate passes through the hollow fibre membrane walls to their bores and flows therein through petting material 20 to the permeate outlet port 29. Raffinate material passes into hollow support mandrel 14 and passes from module 10 through exit port 16. This flow path defines the counterflow mode. As indicated, reversing the functions of access ports 16 and 15 results in the co-flow mode.

The fluid feed to the separating module can be a feed liquid or a feed gas and, in general, it may be admitted at one end of the fiber bundle 12, the pressurized fluid being either removed from, or admitted to flow among the fibers of, the bundle only at the circumferential region 19 left unwrapped or uncoated. The only other access to the fibers per se of the bundle is by means of an inlet or outlet feature 16 of the support rod or mandrel 14, located at the bundle end distal to the unencased region 19. By this means it is ensured that the feed will not bypass the fibers of the bundle and will be constrained to flow generally in a parallel direction to the orientation of the fiber axis and essentially uniformly among the fibers.

## Claims

1. A hollow fiber separatory module (10) for separating fluids into permeate and raffinate components, comprising an annular hollow fiber bundle (12) having first and second ends, potting material (20) encapsulating said second bundle end, an impermeable barrier (18) encasing the entirety of the longitudinal cylindrical surface of said bundle except for an opening (19) located adjacent to said potting material, an end-cap (28) sealed at the first end of the bundle to said barrier, a pressure resistant shell (22) encasing said bundle and defining a channel (34) between the inside surface of said shell and the external surface of said barrier, a port (29) at said second bundle end in fluid communication with the bores of the hollow fibers for the removal of permeate component, a first port (15) at said first bundle end in fluid communication with the external surfaces of the hollow fibers near said second bundle end via the channel (34), and a second port (16) at said first bundle end in fluid communication with the external surfaces of the hollow fibers via a hollow mandrel (14) which extends along the longitudinal axis of the bundle and passes through said end-cap, said bundle (12) consisting of fibers helically wound upon said mandrel (14), characterized in that said impermeable barrier (18) closely conforms to said longitudinal cylindrical surface of said bundle and said opening (19) extends circumferentially around and exposes to said channel (34), at said second end of the bundle, said longitudinal cylindrical surface of said bundle such that feed flow into or raffinate flow out of the longitudinal cylindrical surface at said second end of the bundle is uniform around the bundle.

2. A hollow fiber separatory module according to claim 1, further comprising a seal (30) located between the potting material (20) and the pressure resistant shell (22).

3. A hollow fiber separatory module according to claim 1 or claim 2, wherein the impermeable barrier (18) is a shrink sleeve shrunk onto the hollow fiber bundle (12).

4. A hollow fiber separatory module according to claim 1 or claim 2, wherein the impermeable barrier (18) is a wrap of an impervious film.

5. A hollow fiber separatory module according to claim 4, wherein the impermeable barrier (18) is composed of polyvinylidene.

6. A hollow fiber separatory module according to claim 1 or claim 2, wherein the impermeable barrier (18) is composed of polysiloxane.

7. A hollow fiber separatory module according to any one of the preceding claims, wherein the hollow mandrel (14) comprises a hollow tube having one end extending through the end-cap (28), said one end having an opening therein for communication with the exterior of the module, the hollow tube also having at least one opening in a wall thereof, said opening being located interiorly of the end-cap (28) and providing fluid communication with the fiber bundle (12).

8. The use of a hollow fiber separatory module according to any one of claims 1 to 7, wherein the feed fluid is admitted at the first port (15) and the raffinate component is removed at the second port (16).

9. The use of a hollow fiber separatory module according to any one of claims 1 to 7, wherein the feed fluid is admitted at the second port (16) and the raffinate component is removed at the first port (15).

10. The use of a hollow fiber separatory module, according to claim 8 or 9, for the separation of components in a gaseous fluid mixture.

## Patentansprüche

1. Ein Hohlfaser-Trennmodul (10) für das Separieren von Fluiden in Permeat- und Raffinatkomponenten, umfassend ein ringförmiges Hohlfaserbündel (12) mit einem ersten und einem zweiten Ende, Vergußmaterial (20), mit dem das zweite Bündelende eingekapselt ist, eine impermeable Barriere (18), die die Gesamtheit der zylindrischen Längsoberfläche des Bündels umschließt mit Ausnahme einer Öffnung (19), die nahe dem Vergußmaterial angeordnet ist, eine Endkappe (28), die an dem ersten Ende des Bündels mit der Barriere versiegelt ist, eine druckfeste Schale (22), die das Bündel umschließt und einen Kanal (34) zwischen der Innenoberfläche der Schale und der Außenoberfläche der Barriere begrenzt, eine Öffnung (29) an dem zweiten Bündelende in Fluidkommunikation mit den Bohrungen der Hohlfasern für den Austrag der Permeatkomponente, eine erste Öffnung (15) an dem ersten Bündelende in Fluidkommunikation mit den Außenoberflächen der Hohlfasern nahe dem zweiten Bündelende über den Kanal (34), und eine zweite Öffnung (16) an dem ersten Bündelende in Fluidkommunikation mit den Außenoberflächen der Hohlfasern über einen Hohldorn (14), der sich längs der Längsachse des Bündels erstreckt und die Endkappe durchsetzt, wobei das Bündel (12) aus Fasern besteht, die schraubenlinienförmig um den Dorn (14) gewunden sind, dadurch gekennzeichnet, daß die impermeable Barriere (18) sich dicht an die zylindrische Längsoberfläche des Bündels anschmiegt, und daß die genannte Öffnung (19) sich in Umfangsrichtung um die zylindrische Längsoberfläche des Bündels an dem zweiten Ende des Bündels erstreckt und dieses gegenüber dem Kanal (34) exponiert derart, daß der Zustrom in oder der Raffinatstrom aus der zylindrischen Längsoberfläche an diesem zweiten Ende des Bündels gleichförmig rings um das Bündel ist.

2. Ein Hohlfaser-Trennmodul nach Anspruch 1, ferner umfassend eine Dichtung (30), die zwischen dem Vergußmaterial (20) und der druckfesten Schale (22) angeordnet ist.

3. Ein Hohlfaser-Trennmodul nach Anspruch 1 oder Anspruch 2, bei dem die impermeable Barriere (18) eine Schrumpfhülse ist, die auf das Hohlfaserbündel (12) aufgeschrumpft ist.

4. Ein Hohlfaser-Trennmodul nach Anspruch 1 oder Anspruch 2, bei dem die impermeable Barriere (18) eine Umhüllung aus einer undurchdringlichen Folie ist.

5. Ein Hohlfaser-Trennmodul nach Anspruch 4, bei dem die impermeable Barriere (18) aus Polyvinyliden zusammengesetzt ist.

6. Ein Hohlfaser-Trennmodul nach Anspruch 1 oder Anspruch 2, bei dem die impermeable Barriere (18) aus Polysiloxan besteht.

7. Ein Hohlfaser-Trennmodul nach einem der vorangehenden Ansprüche, bei dem der hohle Dorn (14) ein hohles Rohr umfaßt, das sich mit einem Ende durch die Endkappe (28) erstreckt, welches eine Ende eine Öffnung darin aufweist für die Kommunikation mit dem Äußeren des Moduls, welches hohle Rohr ferner mindestens eine Öffnung in einer Wandung desselben aufweist, welche Öffnung innerhalb der Endkappe (28) liegt und Fluidkommunikation mit dem Faserbündel (12) herstellt.

8. Die Anwendung eines Hohlfaser-Trennmoduls nach einem der Ansprüche 1 bis 7, bei der der Zustrom an der ersten Öffnung (15) eingelassen wird und die Raffinatkomponente an der zweiten Öffnung (16) ausgetragen wird.

9. Die Anwendung eines Hohlfaser-Trennmoduls nach einem der Ansprüche 1 bis 7, bei der der Zustrom an der zweiten Öffnung (16) eingelassen wird und die Raffinatkomponente an der ersten Öffnung (15) ausgetragen wird.

10. Die Anwendung eines Hohlfaser-Trennmoduls nach Anspruch 8 oder 9 für das Trennen der Komponenten in einem Gas/Fluidgemisch.

## Revendications

1. Module (10) creux de séparation en fibres, pour la séparation de fluide en perméat et composé raffiné, comprenant un faisceau (12) de fibres annulaire creux, ayant une première et une seconde extrémité, un matériau de bourrage (20) enrobant ladite seconde extrémité du faisceau, une barrière imperméable (18) emboîtant entièrement la surface cylindrique longitudinale dudit faisceau, exception faite d'une ouverture (19) située de manière adjacente audit matériau de bourrage, un bouchon (28) scellé à ladite barrière au niveau de la première extrémité du faisceau, une coquille (22) résistant à la pression emboîtant ledit faisceau et définissant un canal (34) entre la surface intérieure de ladite coquille et la surface extérieure de ladite barrière, un orifice (29) au niveau de la seconde extrémité de faisceau, qui se trouve en communication par le fluide avec les alésages des fibres creuses pour le passage du perméat, un premier orifice (15) au niveau de ladite première extrémité de faisceau en communication par le fluide avec les surfaces externes des fibres creuses à proximité de ladite seconde extrémité de faisceau par l'intermédiaire du canal (34), et un second orifice (16) au niveau de ladite première extrémité de faisceau en communication par le fluide avec les surfaces externes des fibres creuses par l'intermédiaire d'un arbre creux (14) qui s'étend le long de l'axe longitudinal du faisceau et passe au travers dudit bouchon, ledit faisceau (12) étant constitué de fibres enroulées héllcoïdalement au-dessus dudit arbre (14), caractérisé en ce que ladite barrière imperméable (18) épouse étroitement ladite surface cylindrique longitudinale dudit faisceau, et ladite ouverture (19) s'étend de manière circonférencielle et expose audit canal (34), au niveau de ladite seconde extrémité du faisceau, ladite surface cylindrique longitudinale dudit faisceau, de sorte que le flux d'alimentation à l'intérieur ou le flux raffiné à l'extérieur de la surface cylindrique longitudinale, au niveau de ladite seconde extrémité du faisceau est uniforme autour du faisceau.

2. Module selon la revendication 1, comprenant en outre un joint (30) situé entre le matériau de bourrage (20) et la coquille (22) résistant à la pression.

3. Module selon la revendication 1 ou 2, dans lequel la barrière imperméable (18) est un manchon rétréci sur le faisceau (12) creux en fibres.

4. Module selon la revendication 1 ou 2, dans lequel la barrière imperméable (18) est un enrobage d'un film étanche.

5. Module selon la revendication 4, dans lequel la barrière imperméable est composée de polyvinylidène.

6. Module selon la revendication 1 ou 2, dans lequel la barrière imperméable (18) est composée de polysiloxane.

7. Module selon l'une quelconque des revendications précédentes, dans lequel l'arbre creux (14) comprend un tube creux ayant une extrémité s'étendant à travers le bouchon (28), ladite extrémité ayant une ouverture permettant la communication avec l'extérieur du module, le tube creux ayant également au moins une ouverture dans une de ses parois, ladite ouverture étant située intérieurement au bouchon (28) et permettant une communication par le fluide avec le faisceau (12) en fibres.

8. Utilisation d'un module creux de séparation en fibre selon l'une quelconque des revendications 1 à 7, dans laquelle le fluide d'alimentation est admis au niveau du premier orifice (15) et le composé raffiné est délivré au niveau du second orifice (16).

9. Utilisation d'un module creux de séparation en fibre selon l'une quelconque des revendications 1 à 7, dans laquelle le fluide d'alimentation est admis au niveau du second orifice (16) et le composé raffiné est délivré au niveau du premier orifice (15).

10. Utilisation d'un module selon la revendication 8 ou 9, en vue de la séparation de composant d'un mélange fluide de gaz.
